# EUROPEAN PATENT SPECIFICATION

(11) **EP 0 370 546 B1**
(45) Date of publication and mention of the grant of the patent: **29.06.1994**
(21) Application number: 89202743.4
(22) Date of filing: 31.10.1989
(51) Int. Cl.: C22C 1/09

(54) **Process for producing composite materials with a metal matrix, with a controlled content of reinforcer agent**
Verfahren zur Herstellung von Verbundmaterial mit einer Metallmatrix mit kontrollierter Verstärkungsphase
Procédé pour la préparation d'un matériau composite ayant une matrice métallique et une phase de renforcement contrôlée

(30) Priority: 11.11.1988 IT 2258988
(43) Date of publication of application: 30.05.1990
(73) Proprietor: ENIRISORSE S.p.A., I-00143 Roma (IT)
(72) Inventor: Guerriero, Renato, I-30170 Mestre Venice (IT); Tangerini, Ilario, I-30170 Mestre Venice (IT)
(74) Representative: Fusina, Gerolamo

(56) References cited:
- EP-A- 0 108 281
- EP-A- 0 143 330
- EP-A- 0 256 600
- EP-A- 0 280 830
- EP-A- 0 318 228
- EP-A- 0 344 858
- EP-A- 0 369 928

## Description

The present invention relates to a process for producing composite materials based on a metal matrix, and with a controlled content of reinforcar agent.

Composite materials are combinations of two or more materials existing in distinct phases, suitable for forming predetermined structures showing more advantageous characteristics than of each component.

As compared to those of homogeneous materials, the characteristics of composite materials show improved values as regards their physical properties, mechanical properties and so forth.

A composite material is constituted by a phase (e.g., a metal phase) which surrounds and bonds the other phases (e.g., of ceramic fibres or powders).

In case of metal-matrix composites, endowed with structural characteristics, the relative roles played by the matrix and by the reinforcer phase are the following:
- the reinforcer agent has high values of strength and hardness, and the matrix transfers to it the stresses it is submitted to;
- the matrix has good inherent characteristics (physical characteristics, chemical characteristics, and so forth), and the reinforcer agent serves to endow the material with particularly good mechanical properties.

Some properties of the composites can be computed with exactness by predetermining the volumetric percentages and the characteristics of their component phases; other properties can be computed on approximate models; and other properties can be forecast with difficulty, such as, e.g., fracture strength, which, although is easy determined, is always difficult to be estimated in advance.

The composites can be anisotropic; for example, a composite reinforced with long fibres shows a much higher strength in the direction parallel to the fibres, than in the transversal direction thereof; therefore, the designer will take this matter of fact into due account in order to secure a high strength in the desired direction.

Inasmuch as the reinforcer agent is used in order to improve the mechanical properties of a given matrix, it should be endowed with wall determined requisites, such as, e.g., high values of mechanical strength and of elastic modulus.

These reinforcer materials are in the form of long-fibre or short-fibre filaments, or in the form of powders; for example, whiskers are monocrystalline filaments of a few microns of diameter and of some hundreds of microns of length, endowed with high mechanical properties; they make it possible composites with high characteristics to be obtained. Unfortunately, their costs are still now too high. Silicon carbide whiskers are among those with highest values of tensile strength and of elastic modulus.

The reinforcer agents are usually classified as:
- metal fibres: W, W + SiC, W + B₄C, Be, steel;
- long or short ceramic fibres: Al₂O₃, SiC, C, BN, SiO₂, glass;
- ceramic whiskers: SiC, Si₃N₄, B₄C, Al₂O₃;
- powders: SiC, BN, Si₃N₄, B₄C, SiO₂, Al₂O₃, glass, graphite.

As regards the matrices, one might say that many materials can constitute a matrix: metals and ceramic materials can be mentioned for composites destined to operate at medium-high temperatures; at relatively low temperatures, also a very large number of thermosetting and thermoplastic resins can be advantageously used.

As compared to resins, metals are affected by some disadvantages in terms of weight, anyway compensated for by the high values of their mechanical properties at higher temperatures, as well as by sometimes favourable characteristics of electrical and heat conductivity.

The economic attractions for a particular matrix to be used increase in case the reinforcer agent expands its application field.

The methods of preparation known from the prior art depend on the type of metal matrix used; anyway, limiting ourselves to the most diffused matrix, i.e., Al or its alloys, we may describe them as follows:
- Method of reinforcer agent dispersion
   This method consists in adding short fibres or whiskers or reinforcer particles to a metal bath kept in the molten state, with strong stirring and under an inert blanketing atmosphere. The step of casting or extrusion is subsequently carried out. A preliminary treatment should be usually carried out on the reinforcer agents in order to secure the wettability thereof by the matrix.
- Method of dispersion of the reinforcer agent on a partially solid matrix
   This method consists in dispersing the reinforcer agent into the semisolid metal matrix, with stirring. Said semisolid metal matrix is obtained by submitting the alloy to shear stresses during the step of cooling from a molten mass, so that it is in a semiliquid condition even when its content of solid matter exceeds 50%.
   The semisolid composite is subsequently cast.
- Method of powder metallurgy
   This method consists in cold compacting blends of powders of matrix material and of reinforcer material, and in subsequently submitting them to hot-pressing.
   The pieces can be then submitted to mechanical processings, to lamination or to extrusion. Composites with reinforcer fibres can be obtained as well, if a suitable system of pre-impregnation of green premoulded pieces of the fibre with matrix powder suspensions is used.
- Method of fibre metallization
   This method consists of pre-coating the fibres with metals, by means of a molten metal bath, or by plasma-spraying or electrolytic methods.
   In order to obtain the composite, the fibres are then hot-compacted at high enough temperatures for the metal layer to fill all of the cavities.
- Method of layer compaction
   This method consists in alternating layers of fibres with layers of matrix in the form of sheets. The subsequent hot-pressing under vacuum will enable the metal to flow through the fibres, with a homogeneous distribution of same fibres in the end composite being obtained.
- Infiltration method
   This method consists in causing a molten alloy of Al to flow, under an increased pressure (comprised within the range of from 10 to 30 MPa), through a preformed green piece, or a suitable pattern of powders and fibres contained inside a mould.
   The time of solidification of the alloy, after the occurred infiltration, is such as to minimize the phenomena of chemical reaction between the matrix and the reinforcer agent.

Inasmuch as the minimum compaction value of a given reinforcer powder is already per se high (about 50% by volume), the problems arise of being able to obtain by infiltration composites containing a powder percentage lower than the above said value and of being able to secure a predetermined and reproducible content.

For example, EP-A-0369928 discloses a method for forming metal matrix composites having variable filler loadings. It exemplifies a process in which a preform was made by mixing powdered alumina and an aluminium alloy. The preform was then spontaneously infiltrated with the same aluminium alloy (i.e. without pressurising the matrix metal). The use of the matrix metal diluent enables composites containing 1-75 vol. % to be made. Such method therefore can be applied only to particular aluminium alloys and only to obtain products having a limited thickness.

EP-A-0256600 discloses a composite material of Zn-Al alloy reinforced with silicon carbide powder. The composite may also contain whiskers such as glass materials, metal oxides or steels. The maximum content of the powdered reinforcing agent that should be present in the composite is unclear and no restriction on the choice of diluting agents is imposed. EP'600 does not disclose the blending of the reinforcing powder and wiskers before adding the molten metal matrix.

The present Applicant found now a process by infiltration which overcomes the hindrances determined by the infiltration processes known from the prior art.

The present invention, therefore, concerns a Process for producing a composite material consisting of a metal matrix of a metal or an alloy of metals selected from Pb, Zn, Al, Mg, Cu, Sn, In, Ag, Au and a reinforcing agent in an amount lower than 50% by volume by infiltrating said reinforcing agent with said molten metal matrix under pressure, comprising the steps of:
(a) preparing a diluted reinforcing agent by blending non-metallic powders with a metallic powder having the same composition as that of said metallic matrix;
(b) introducing said diluted reinforcing agent into a mould;
(c) applying pressure to infiltrate said diluted reinforcing agent with said molten metal matrix, and
(d) allowing said metal matrix to solidify.

As above disclosed, the metal matrices of said composite materials are selected from among Pb, Zn, Al, Mg, Cu, Sn, In, Ag, Au or their alloys.

The reinforcer agent is constituted by non-metal powders.

The diluting agent is selected from among metal powders of the same composition as of the matrix.

As non-metal powders, the following can be used: - SiC, BN, Si₃N₄, B₄C, SiO₂, Al₂O₃, glass, graphite.

The blending of the reinforccr agent and of the diluting agent is carried out in such a way as to obtain green premoulded pieces which are then charged to the casting mould.

By means of the term "green premoulded pieces" pieces are meant, which have a porous structure with a suitable and predetermined shape, such as, e.g., sheets, bars, disks, rings, tubes, elbows, and so forth, to be subsequently charged to the casting moulds in order to either totally or partially reinforce a metal casting.

Some examples are now given for the purpose of better illustrating the invention.

### Examples 1 - 4

By blending a reiforcer agent in powder form and a metal powder, and subsequently charging them to a casting mould and then infiltrating them with a molten metal matrix of the same composition as of the above said metal powder, composite materials are obtained after solidificatian, which contain less than 50% by volume of reinforcer agents.

The resulting products are the following:
1) 25% by volume of SiC powder +
   25% by volume of lead powder;
   infiltrate: lead
2) 20% by volume of SiC powder +
   30% by volume of lead powder;
   infiltrate: lead
3) 40% by volume of SiC powder +
   10% by volume of Zn-Al alloy powder (at 27% by weight of Al);
   infiltrate: Zn-Al alloy at 27% by weight of Al.
4) 30% by volume of SiC powder +
   20% by volume of Zn-Al alloy powder (at 11% by weight of Al);
   infiltrate: Zn-Al alloy at 11% by weight of Al.

### Examples 5 - 7 (Comparative Examples)

By filling the casting mould with a homogeneous reinforcer agent in powder form and subsequently infiltrating it with a molten metal matrix of the same composition as of the above said metal powder, composite materials are obtained after solidification, which contain about 50% by volume of reinforcer agent.

The resulting products are the following:
5) about 50% by volume of SiC powder; infiltrate: lead
6) about 50% by volume of SiC powder; infiltrate: Zn-Al alloy at 27% by weight of Al.
7) about 50% by volume of SiC powder; infiltrate: Pb-Ag alloy at 0.75% by weight of Ag.

## Claims

1. Process for producing a composite material consisting of a metal matrix of a metal or an alloy of metals selected from Pb, Zn, Al, Mg, Cu, Sn, In, Ag, Au and a reinforcing agent in an amount lower than 50% by volume by infiltrating said reinforcing agent with said molten metal matrix under pressure, characterized in that it comprises the steps of:
(a) preparing a diluted reinforcing agent by blending non-metallic powders with a metallic powder having the same composition as that of said metallic matrix;
(b) introducing said diluted reinforcing agent into a mould;
(c) applying pressure to infiltrate said diluted reinforcing agent with said molten metal matrix, and
(d) allowing said metal matrix to solidify.

2. Process according to Claim 1, wherein the non-metallic-powders are selected from SiC, BN, Si₃N₄, B₄C, SiO₂, Al₂O₃, glass and graphite.

3. Process according to Claim 1, said diluted reinforcing agent is prepared in the form of green pre-moulded pieces.

## Patentansprüche

1. Verfahren zur Herstellung eines Verbundmaterials,bestehend aus einer Metallmatrix aus einem Metall oder einer Legierung von Metallen, ausgewählt unter Pb, Zn, Al, Mg, Cu, Sn, In, Ag und Au, und aus einem Verstärkungsmittel in einer Menge kleiner als 50 Vol.-%, durch Infiltrieren des Verstärkungsmittels mit der geschmolzenen Metallmatrix unter Druck, dadurch gekennzeichnet, daß es die folgenden Stufen umfaßt:
(a) Bereiten eines verdünnten Verstärkungsmittels durch Vermischen nichtmetallischer Pulver mit einem Metallpulver, das die gleiche Zusammensetzung wie die Metallmatrix aufweist;
(b) Einbringen des verdünnten Verstärkungsmittels in eine Form;
(c) Aufbringen von Druck zum Infiltrieren des verdünnten Verstärkungsmittels mit der geschmolzenen Metallmatrix und
(d) Verfestigenlassen der Metallmatrix.

2. Verfahren nach Anspruch 1, worin die nichtmetallischen Pulver unter SiC, BN, Si₃N₄, B₄C, SiO₂, Al₂O₃, Glas und Graphit ausgewählt werden.

3. Verfahren nach Anspruch 1, worin das verdünnte Verstärkungsmittel in Form von vorgeformten Grünkörpern bereitet wird.

## Revendications

1. Méthode de préparation d'un matériau composite constitué d'une matrice métallique d'un métal ou d'un alliage de métaux choisis parmi Pb, Zn, Al, Mg, Cu, Sn, In, Ag et Au, et d'un agent de renforcement utilisé à raison de moins de 50 % en volume, par infiltration sous pression dudit agent de renforcement avec ladite matrice métallique en fusion, caractérisée en ce qu'elle comprend les étapes suivantes :
(a) Préparation d'un agent de renforcement dilué par mélange d'une poudre non métallique avec une poudre métallique ayant la même composition que ladite matrice métallique;
(b) Introduction dudit agent de renforcement dilué dans un moule;
(c) Application d'une pression afin d'infiltrer ledit agent de renforcement dilué avec ladite matrice métallique en fusion;
(d) Solidification de ladite matrice métallique.

2. Procédé conforme à la revendication 1, dans lequel les poudres non métalliques sont choisies parmi SiC, BN, Si₃N₄, B₄C, SiO₂, Al₂O₃, le verre et le graphite.

3. Procédé conforme à la revendication 1, dans lequel ledit agent de renforcement dilué est préparé sous forme de pièces prémoulées crues.
